# EUROPÄISCHE PATENTSCHRIFT

(11) **EP 3 148 884 B1**
(45) Veröffentlichungstag und Bekanntmachung des Hinweises auf die Patenterteilung: **04.04.2018**
(21) Anmeldenummer: 15722715.8
(22) Anmeldetag: 13.05.2015
(51) Int. Cl.: B65C 9/04, B65C 9/06, B65G 47/244, B65B 17/02, B65B 21/00, B65B 35/26, B65G 47/80

(54) **VORRICHTUNG UND VERFAHREN ZUM GESTEUERTEN AUSRICHTEN UND/ODER DREHEN VON BEHÄLTERN**
DEVICE AND METHOD FOR CONTROLLED ORIENTATION AND/OR ROTATION OF CONTAINERS
DISPOSITIF ET PROCÉDÉ POUR ORIENTATION ET/OU ROTATION CONTRÔLÉ DES RECIPIENTS

(30) Priorität: 27.05.2014 DE 102014107427
(43) Veröffentlichungstag der Anmeldung: 05.04.2017
(73) Patentinhaber: KHS GmbH, 44143 Dortmund (DE)
(72) Erfinder: PAU, Norman, 47533 Kleve (DE); NITSCH, Thomas, 47533 Kleve (DE); LELIE, Thomas, 47533 Kleve (DE); DÜPPER, Josef, 47551 Bedburg-Hau (DE)
(86) Internationale Anmeldenummer: PCT/EP2015/060554
(87) Internationale Veröffentlichungsnummer: WO 2015/180959

(56) Entgegenhaltungen:
- EP-A1- 1 167 213
- WO-A2-2010/081516
- DE-A1- 2 623 818
- GB-A- 2 091 201

## Beschreibung

Die Erfindung bezieht sich auf eine Vorrichtung zum gesteuerten Ausrichten und/oder Drehen von Behältern gemäß Oberbegriff Patentanspruch 1 und dabei insbesondere auf eine Vorrichtung, mit der Behälter zwischen einem Behältereinlauf und einem Behälterauslauf auf einem Ausrichtabschnitt einer Transport- und Ausrichtstrecke in einer gewünschten Orientierung wenigstens einmal ausgerichtet werden, und zwar durch gesteuertes Drehen oder Schwenken um ihre Behälterachse. Der Ausrichtabschnitt erstreckt sich dabei über die gesamte Transport- und Ausrichtstrecke oder ist wenigstens ein Teilabschnitt der Transport- und Ausrichtstrecke. Weiterhin bezieht sich die Erfindung auf ein Verfahren zum gesteuerten Ausrichten und/oder gesteuerten Drehen von Behältern.

Bekannt ist es, bei Etikettiermaschinen am Umfang eines um eine vertikale Maschinenachse umlaufend antreibbaren Rotors eine Vielzahl von Behälteraufnahmen vorzusehen, und zwar zur Aufnahme jeweils eines zu etikettierenden oder mit einer anderen Ausstattung zu versehenen Behälters. Bekannt ist es hierbei auch, die Behälteraufnahmen jeweils drehangetrieben oder drehgesteuert auszubilden, um die an die in den Behälteraufnahmen vorgesehenen Behälter - z.B. beim Vorbeibewegen an einem Etikettier- oder Druckaggregat - durch gesteuertes Drehen um ihre Behälterachse so auszurichten, dass sie eine geforderte Orientierung aufweisen, beispielsweise in Bezug auf ein Behältermerkmal, und/oder um die Behälter bei dem Passieren und/oder nach dem Passieren des Etikettier-oder Druckaggregates um ihre Behälterachse um einen vorgegebenen Winkelbetrag zu drehen. Die gesteuerte Drehbewegung der einzelnen Behälteraufnahmen wird insbesondere dann, wenn diese Behälteraufnahmen jeweils individuell gedreht werden vorzugsweise dadurch erzeugt, dass jeder Behälteraufnahme ein eigener steuerbarer Drehantrieb mit einem eigenen elektrischen Stell- oder Servomotor zugeordnet ist. Allein schon die Vielzahl der Drehantriebe bedeutet einen erheblichen konstruktiven Aufwand.

Bekannt ist auch (DE 26 23 818 A1) für sämtliche an einem Rotor einer Etikettiermaschine vorgesehene und als Drehteller ausgebildete Behälterträger einen gemeinsamen Drehantrieb vorzusehen, und zwar in Form eines Zahnriementriebes mit Zahnriemen, der über ein zentrales, antreibendes Riemenrad sowie über Riemenräder der einzelnen Drehteller geführt ist. Eine individuelle Steuerung der Behälterträger bzw. Drehteller, d.h. ein gesteuertes Drehen jedes Drehtellers unabhängig von den anderen Drehtellern auf der Transport- und Ausrichtstrecke zwischen einem Behälterauslauf und einem Behälterauslauf oder auch nur auf einem Teilabschnitt dieser Strecke ist nicht möglich.
Bekannt ist weiterhin eine Vorrichtung zum Ausrichten von Behältern (DE 30 22 343 C2) mit einem um eine vertikale Achse umlaufend antreibbaren Transportstern, der an seinem Umfang mit einer Vielzahl von Behälteraufnahmen ausgebildet ist. Diese bestehen jeweils aus einer umfangsseitig offenen Behältertransporttasche mit einer bezogen auf die Drehrichtung des Transportsternes vorauseilenden und nacheilenden Behälteranlage, gegen die der jeweilige Behälter mit seiner Umfangsfläche anliegt und die von einem Abschnitt eines Ausrichtriemens oder - bandes gebildet ist. Dieser ist als geschlossene Schlaufe endlos umlaufend antreibbar, und zwar durch einen Drehantrieb mit Stell- oder Servomotor, der ebenso wie der Ausrichtriemen für jede Behälteraufnahme eigenständig vorgesehen ist. Allein schon die Vielzahl der Drehantriebe bedeutet wiederum einen erheblichen konstruktiven Aufwand.

Aus der WO 2010/081516 A2 ist eine Vorrichtung gemäß dem Oberbegriff des Anspruchs 1 bekannt.

Aufgabe der Erfindung ist es, eine Vorrichtung zum gesteuerten Ausrichten und/oder Drehen von Behältern aufzuzeigen, die es bei reduziertem konstruktiven Aufwand und einer Vielzahl von Behälteraufnahmen an einem Transportelement ermöglicht, zumindest diejenigen Behälteraufnahmen, die sich jeweils auf dem Ausrichtabschnitt der sich zwischen dem Behältereinlauf und dem Behälterauslauf erstreckenden Transport- und Ausrichtstrecke befinden, individuell, d.h. unabhängig voneinander für das Ausrichten und/oder Drehen der Behälter um ihre Behälterachse gesteuert individuell zu drehen.
Zur Lösung dieser Aufgabe ist eine Vorrichtung zum gesteuerten Ausrichten und Drehen von Behältern entsprechend dem Patentanspruch 1 ausgebildet. Ein Verfahren zum gesteuerten Ausrichten und/oder Drehen von Behältern ist entsprechend dem Patentanspruch 11 ausgebildet.

Der besondere Vorteil der erfindungsgemäße Vorrichtung besteht darin, dass trotz der Vielzahl von drehgesteuerten Behälteraufnahmen nur eine reduzierte Anzahl von steuerbaren Drehantrieben notwendig ist, und zwar für eine Gruppe von Behälteraufnahmen nur ein einziger steuerbarer Drehantrieb mit Stell- oder Servomotor, und dennoch für die Behälteraufnahmen der unterschiedlichen Gruppen zumindest auf einem Ausrichtabschnitt der Transport- und Ausrichtstrecke ein gesteuertes individuelles Drehen möglich ist. Dies bedeutet, jede Behälteraufnahme einer Gruppe, die (Behälteraufnahme) sich entlang des Ausrichtabschnitts bewegt, kann unabhängig von den dortigen Behälteraufnahmen der anderen Gruppen gesteuert drehen. In besonders vorteilhafter Weise können weiterhin die elektrischen Stell- oder Servomotoren der Drehantriebe stationär an einem Maschinengestell vorgesehen werden, d.h. es ist nicht erforderlich, dass diese Stell- oder Servomotoren mit dem die Behälteraufnahmen aufweisenden Transportelement mitbewegt werden. Hierdurch entfällt auch die Notwendigkeit von elektrischen Verbindungen über Schleifkontakte für die Steuerung und/oder Versorgung der Stell- oder Servomotoren.

Der für die Behälteraufnahmen jeder Gruppe von Behälteraufnahmen gemeinsame Drehantrieb umfasst beispielsweise einen Band-, Ketten- oder Riementrieb, der sämtliche Behälteraufnahmen der jeweiligen Gruppe mit einem dieser Gruppe zugeordneten Stell- oder Servomotor antriebsmäßig verbindet. Hierbei ist es insbesondere auch möglich, dass der Riemen selbst Anlageflächen für die in oder an den Behälteraufnahmen angeordneten Behälter oder deren Mantelfläche bildet. Weiterhin besteht auch die Möglichkeit, dass die Behälteraufnahmen jeder Gruppe von Behälteraufnahmen über ein Zahnradgetriebe mit dem zugehörigen Stell- oder Servomotor antriebsmäßig verbunden sind.

"Drehgesteuerte Behälteraufnahmen" sind im Sinne der Erfindung ganz allgemein Aufnahmen, in oder an denen die Behälter beim Transport zwischen dem Behältereinlauf und dem Behälterauslauf angeordnet sind und die für eine gesteuerte Drehbewegung der Behälter um ihre Behälterachse, vorzugsweise um ihre vertikale oder im Wesentlichen vertikale Behälterachse ausgebildet sind. In diesem Sinne sind drehgesteuerte Behälteraufnahmen u.a. Drehteller, auf denen die Behälter mit ihrem Behälterboden aufstehen, Greifer und Behälterträger, auch solche für eine hängende Halterung der Behälter, sowie Behältertransporttaschen, deren Behälteranlageflächen für ein gesteuertes Drehen der Behälter drehend oder umlaufend ausgeführt, beispielsweise von wenigstens einem umlaufend antreibbaren Ausrichtriemen oder -band gebildet sind.

"Ausrichten der Behälter" bedeutet im Sinne der Erfindung, dass die Behälter um ihre Behälterachse gesteuert gedreht werden, so dass sie dann eine gewünschte Orientierung aufweisen, beispielsweise in Bezug auf ein Behältermerkmal oder in Bezug auf ein auf den jeweiligen Behälter aufgebrachtes Element, wie z.B. Etikett, Aufdruck, Kleberauftrag usw..

"Behälter" sind im Sinne der Erfindung insbesondere Dosen, Flaschen, Tuben, Pourches, jeweils aus Metall, Glas und/oder Kunststoff, aber auch andere Packmittel, die zum Abfüllen Produkten, insbesondere auch von flüssigen oder viskosen geeignet sind.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

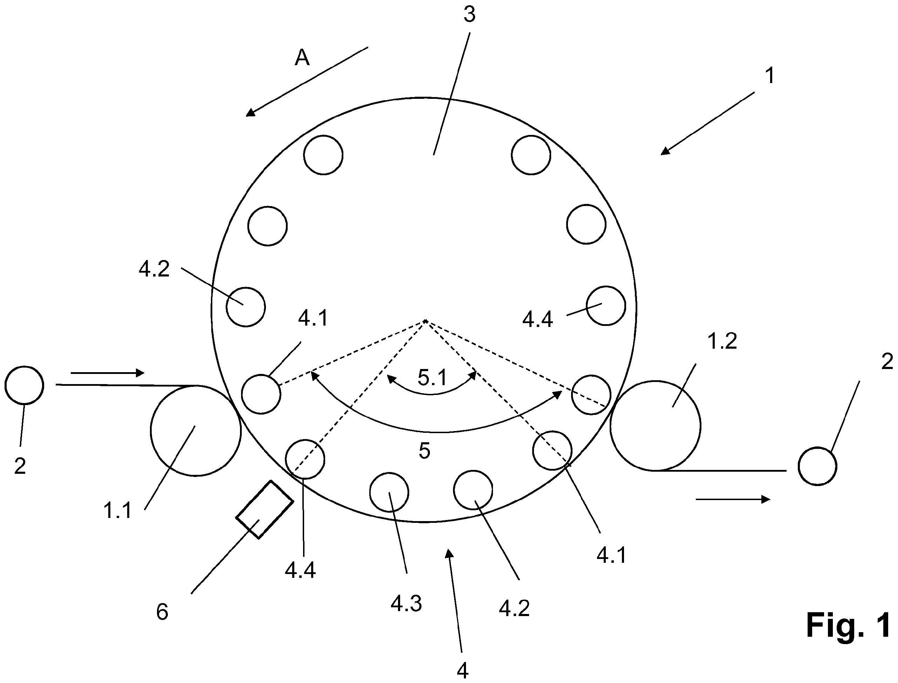

- Fig. 1: in schematischer Darstellung und in Draufsicht eine Vorrichtung zum Ausrichten von Behältern gemäß der Erfindung mit mehreren am Umfang eines Rotors angeordneten Behälteraufnahmen;
- Fig. 2: in einer schematischen Darstellung und in Draufsicht die Zahnriemen einer Antriebseinheit zum gesteuerten Drehen der Behälterträger,
- Fig. 3: die Antriebseinheit der Figur 2 in schematischer Darstellung und in Seitenansicht;
- Fig. 4: in Einzeldarstellung mehrere um eine gemeinsame Achse drehbar gelagerte und Zahnriemen der Antriebseinheit der Figur 3 antreibende Zahnriemenräder;
- Fig. 5: in einer Darstellung wie Figur 3 eine mehrere Zahnkränze und Zahnräder aufweisende Antriebseinheit gemäß einer weiteren Ausführungsform der Erfindung;
- Fig. 6 - 9: jeweils in schematischer Darstellung verschiedene Anwendungsbeispiele der erfindungsgemäßen Vorrichtung;
- Fig. 10: in perspektivischer Darstellung ein aus mehreren Behältern bestehendes Gebinde.

Die in den Figuren allgemein mit 1 bezeichnete Vorrichtung dient zum wenigstens einmaligen Ausrichten, gesteuerten Drehen und Transportieren von Behältern 2 auf einem Orientierungs- oder Ausrichtabschnitts 5.1 einer Ausricht- und Transportstrecke 5 in der Weise, dass diese nach dem Ausrichten eine gewünschte Orientierung aufweisen bzw. auf dem Ausrichtabschnitts 5.1 um einen gewünschten Winkelbetrag gedreht wurden, wobei dieser Winkelbetrag der Drehung beim Ausrichten von Behälter 2 zu Behälter 2 unterschiedlich sein kann, und zwar abhängig von der Orientierung, die der jeweilige Behälter 2 beim Einlauf in den Ausrichtabschnitt 5.1 zufällig aufwies.

Die Vorrichtung 1 umfasst u.a. einen Behältertransporteur, der bei der dargestellten Ausführungsform von einem um eine vertikale Maschinenachse MA umlaufend angetriebenen (Pfeil A) am Rotor 3 gebildet ist. Am Umfang des Rotors 3 sind in Dreh- oder Transportrichtung A aufeinander folgend mehrere Behälteraufnahmen 4.1 - 4.4 vorgesehen, und zwar in gleichmäßigen Winkel- oder Teilungsabständen um die Maschinenachse MA voneinander beabstandet. Die Behälteraufnahmen 4.1 - 4.4, die der einfacheren Darstellung wegen als Drehteller dargestellt sind, auf denen die Behälter 2 mit ihrem Behälterboden aufstehen, bilden mehrere Gruppen von Behälteraufnahmen, d.h. bei der dargestellten Ausführungsform vier Gruppen, von denen jede Gruppe mehrere dieser Gruppe zugeordnete Behälteraufnahmen aufweist, d.h. eine erste Gruppe mehrere Behälteraufnahmen 4.1, eine zweite Gruppe mehrere Behälteraufnahmen 4.2, eine dritte Gruppe mehrere Behälteraufnahmen 4.3 und eine vierte Gruppe mehrere Behälteraufnahmen 4.4. Die Anzahl der Behälteraufnahmen 4.1 - 4.4 ist in den Gruppen identisch und beträgt beispielsweise Vier.

Die Anordnung der Behälteraufnahmen ist weiterhin so getroffen, dass in Dreh- oder Transportrichtung A jeweils auf eine Behälteraufnahme 4.1 eine Behälteraufnahme 4.2, auf diese eine Behälteraufnahme 4.3, auf diese eine Behälteraufnahme 4.4 sowie daran anschließend wieder eine Behälteraufnahme 4.1 folgen. Die Behälteraufnahmen 4.1 - 4.4 bilden somit mehrere Folgen 4 von Behälteraufnahmen, wobei jede Folge 4 eine Behälteraufnahme einer jeden Gruppe aufweist.

Zum Ausrichten und gesteuerten Drehen der Behälter 2 werden diese jeweils einzeln über einen Behältereinlauf 1.1 der Vorrichtung 1 an eine der Behälteraufnahmen 4.1 - 4.4 übergeben. Die Behälter 2 werden den Behälteraufnahmen 4.1 - 4.2 an einem Behälterauslauf 1.2 der Vorrichtung 1 entnommen. Der Winkelbereich der Drehbewegung des Rotors 3 zwischen dem Behältereinlauf 1.1 und dem Behälterauslauf 1.2 bildet die Ausricht- und Transportstrecke 5. Auf dieser, d.h. auf dem Ausrichtabschnitt 5.1 der Ausricht- und Transportstrecke 5 erfolgt das wenigstens einmalige Ausrichten und gesteuerte Drehen der Behälter 2 durch gesteuertes Drehen der jeweiligen Behälteraufnahme 4.1 - 4.4 um ihre vertikale Achse BA, und zwar beispielsweise gesteuert durch das Signal wenigstens eines Sensors 6, der beispielsweise die aktuelle Orientierung oder Drehstellung der jeweiligen Behälteraufnahme 4.1 - 4.4 und/oder des jeweiligen Behälters 2 erfasst. Dabei kann es sich bei dem Sensor 6 um jedes geeignete Mittel handeln, welches es ermöglicht einen Behälter 2 in der notwendigen Weise zu erfassen. Beispielsweise handelt es sich bei dem Sensor um eine elektronische Digitalkamera mit einem nachgeschalteten System zur computerunterstützen Bildverarbeitung. Jeder Behälter 2 weist dann nach dem Ausrichten eine gewünschte Orientierung auf und/oder wurde aus seiner ursprünglichen Orientierung um einen gewünschten Winkelbetrag um seine vertikale Behälterachse gedreht. Die Länge, die der Ausrichtabschnitts 5.1 in der Transportrichtung A aufweist, ist gleich der entsprechenden Länge einer Folge 4 oder der Summe der Teilungsabstände zwischen den Behälteraufnahmen 4.1 - 4.4 einer Folge 4.

Eine Besonderheit der Vorrichtung 1 besteht darin, dass für sämtliche Behälteraufnahmen 4.1 - 4.4 jeder Gruppe von Behälteraufnahmen jeweils nur ein einziger Drehantrieb erforderlich ist, mit dem das gesteuerte Drehen nur der Behälteraufnahmen 4.1 - 4.4 der jeweiligen Gruppe um die Achsen BA erfolgt. Dies wird dadurch möglich, dass die Länge bzw. der Winkelbereich des Ausrichtabschnitts 5.1 höchstens gleich dem Winkelbereich ist, über den sich eine Folge 4 erstreckt. Bei der dargestellten Ausführungsform ist somit der Winkelbereich der Rotordrehbewegung, der dem Ausrichtabschnitt 5.1 entspricht, 90° oder im Wesentlichen 90° oder kleiner.

Mit dem für jede Gruppe von Behälteraufnahmen 4.1 - 4.4 eigenständig vorgesehenen Drehantrieb erfolgt das individuelle gesteuerte Drehen derjenigen Behälteraufnahmen 4.1 - 4.4, die sich auf dem Ausrichtabschnitt 5.1 befinden. Die restlichen Behälteraufnahmen 4.1 - 4.4 jeder Gruppe werden dabei zwangsläufig mitgedreht.

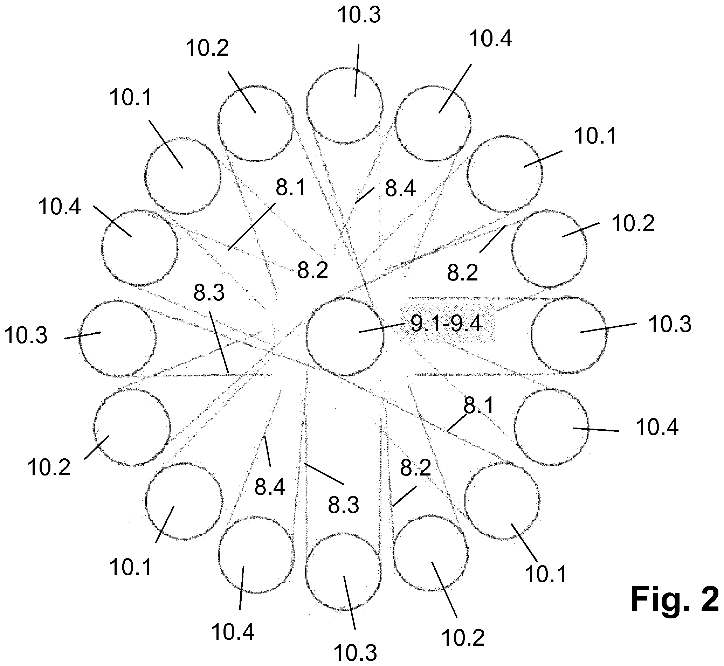

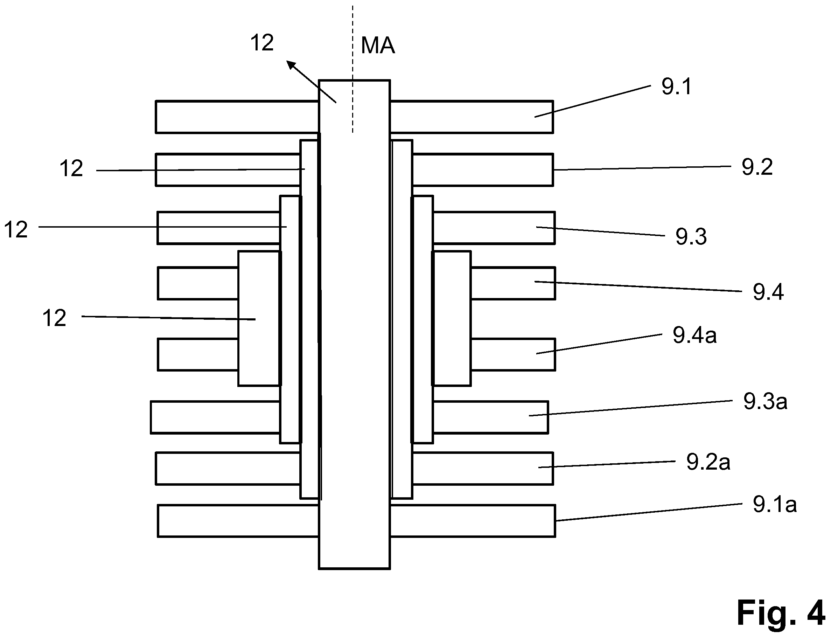

Der für die Behälteraufnahmen 4.1 - 4.4 jeder Gruppe von Behälteraufnahmen gemeinsame Drehantrieb ist entsprechend den Figuren 2 - 4 durch eine Antriebseinheit 7 realisiert, die u.a. für jede Gruppe einen endlos umlaufenden und eine in sich geschlossene Schlaufe bildenden Zahnriemen 8.1 - 8.4 aufweist. Die Zahnriemen 8.1 - 8.4 bzw. deren Schlaufen sind in unterschiedlichen, in Richtung der Maschinenachse MA gegen einander versetzten Ebenen angeordnet. Jeder Zahnriemen 8.1 - 8.4 ist über ein für jede Gruppe von Behälteraufnahmen eigenständiges und achsgleich mit der Maschinenachse MA angeordnetes, den Zahnriemen 8.1 - 8.4 antreibendes Zahnriemenrad 9.1 - 9.4, über nicht dargestellte Umlenkräder sowie auch über angetriebene Zahnriemenräder 10.1 - 10.4 geführt. Letztere sind an drehbar im Rotor 3 gelagerten Wellen 11 vorgesehen, die jeweils achsgleich mit einer Achse BA orientiert sind und eine Behälteraufnahme 4.1 - 4.4 tragen.

Die zentralen Zahnriemenräder 9.1 - 9.4 sind jeweils an Wellen 12 vorgesehen, die vorzugsweise achsgleich mit der Maschinenachse MA angeordnet teilweise als Hohlwellen einander konzentrisch umschließend und aneinander drehbar gelagert ausgeführt sind. Jede Welle 12 weist zusätzlich zu ihrem zentralen Zahnriemenrad 9.1 - 9.4 ein weiteres als Zahnrad oder Zahnriemenrad 9.1a - 9.4a ausgebildetes Rad auf, welches von dem nicht dargestellten individuellen Stell- oder Servomotor der jeweiligen Gruppe von Behälteraufnahmen angetrieben wird.

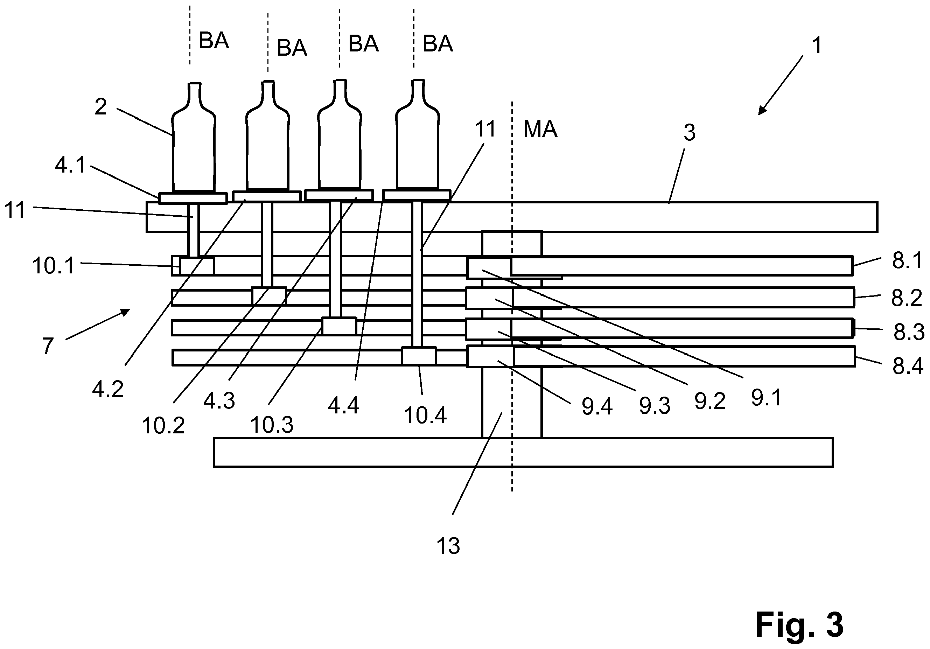

Wie in der Figur 3 angedeutet ist der Rotor 3 an einem Maschinengestell 13 drehbar gelagert. In diesem Maschinengestell ist auch der die Drehbewegung des Rotors 3 um die Maschinenachse MA erzeugende, nicht dargestellte Rotorantrieb vorgesehen, der dann beispielsweise über eine zentrale, achsgleich mit der Maschinenachse MA angeordnete Welle den Rotor 3 antreibt. Auf dieser Welle sind dann die als Hohlwellen ausgebildeten Wellen 12 angeordnet.

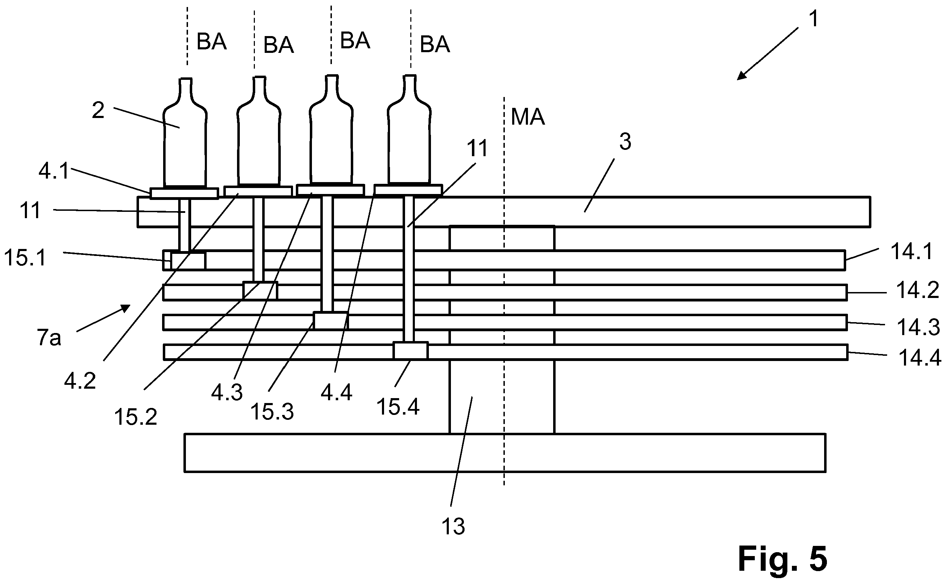

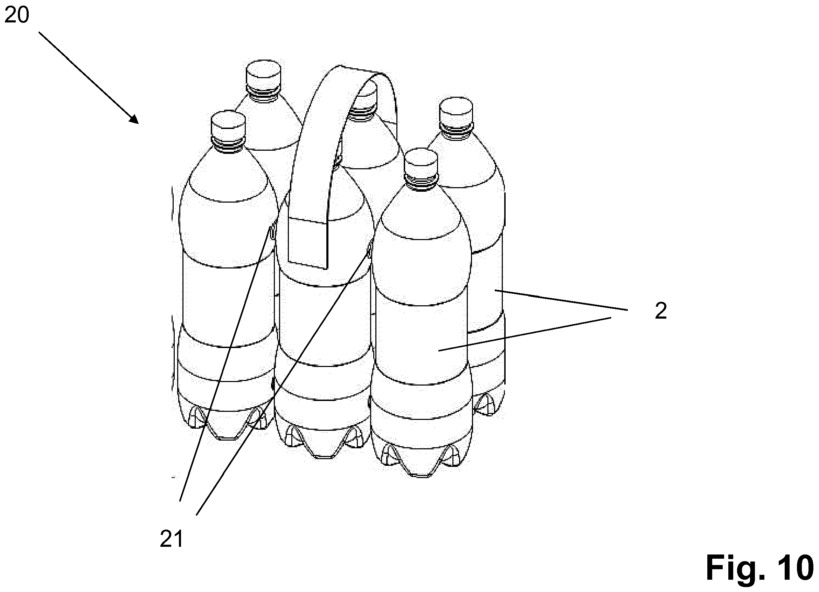

Die Figur 5 zeigt in einer Darstellung wie Figur 3 eine Antriebseinheit 7a, die anstelle der Antriebseinheit 7 Verwendung finden kann und ein Zahnradgetriebe aufweist. Achsgleich mit der Maschinenachse MA und in mehreren in Richtung der Maschinenachse MA versetzten Ebenen sind Zahnkränze 14.1 - 14.2 vorgesehen, die jeweils durch einen eigenen Stell- oder Servomotor um die Maschinenachse MA individuell drehbar sind. Jeder Zahnkranz 14.1 - 14.4 ist einer Gruppe von Behälteraufnahmen zugeordnet. Die Behälteraufnahmen 4.1 - 4.4 jeder Gruppe sind über Zahnräder 15.1 - 15.4 mit dem dieser Gruppe entsprechenden Zahnkranz 14.1 - 14.4 verbunden, sodass wiederum mit einem einzigen für jede Gruppe vorgesehenen Stell- oder Servomotor sämtliche Behälteraufnahmen 4.1 - 4.4 dieser Gruppe für das Ausrichten und gesteuerte Drehen der Behälteraufnahmen 4.1 - 4.4 und der Behälter 2 auf dem Ausrichtabschnitt 5.1 gesteuert gedreht werden.
Der besondere Vorteil der Vorrichtung 1 besteht u.a. darin, dass die benötigte Anzahl der Stell- oder Servomotoren erheblich reduziert wird, d.h. beispielsweise bei insgesamt sechszehn Behälteraufnahmen 4.1 -4.4, die vier Gruppen bilden, lediglich vier Stell- oder Servomotoren erforderlich sind. Hierdurch ergibt sich auch eine wesentliche Reduzierung des Steuerungsaufwandes.

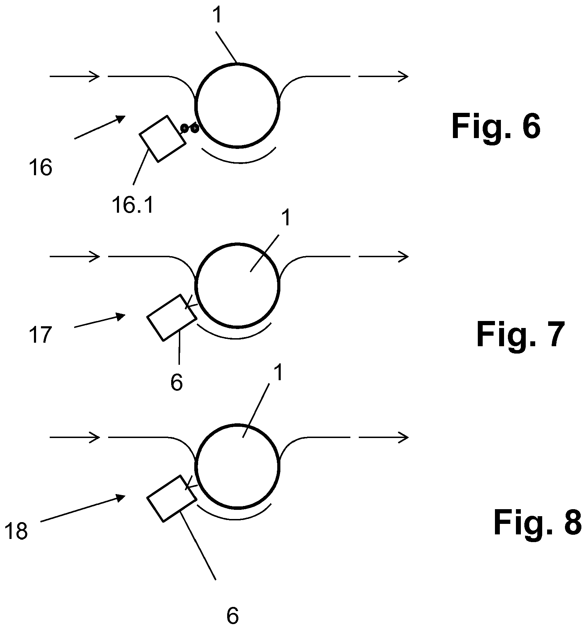

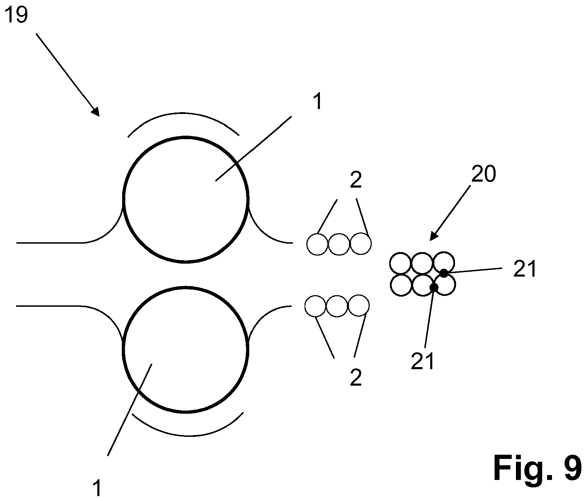

In den Figuren 6 - 10 sind schematisch verschiedene Anwendungen für die Vorrichtung 1 wiedergegeben.
Beispielsweise wird die Vorrichtung 1 als Bestandteil einer Etikettiermaschine 16 zum Aufbringen von Etiketten jeweils auf einen vorgegebenen und der Sensoreinheit 6 erfassten Bereich der Behälter 2 (Figur 6) mit Hilfe eines Etikettieraggregates 16.1 verwendet.
Beispielsweise kann die Vorrichtung 1 auch als Bestandteil eines Aggregates 17 zum Ausrichten von (bereits) mit einer Ausstattung versehenen Behältern 2 und zur anschließenden Weitergabe der ausgerichteten Behälter 2 an eine nachfolgende Maschine, beispielsweise an eine Maschine zur Bildung von Gebinden aus mehreren Behältern 2 (Figur 7) verwendet werden.
Beispielsweise kann die Vorrichtung 1 auch als Bestandteil eines Aggregates 18 zum Ausrichten von Behältern 2 mit einem polygonalen Querschnitt, beispielsweise mit einem quadratischen oder rechteckigen Querschnitt und zur Weitergabe der ausgerichteten Behälter an eine nachfolgende Maschine, beispielsweise an eine Maschine zur Bildung von Gebinden aus mehreren Behältern 2 (Figur 8) verwendet werden.
Beispielsweise kann die Vorrichtung 1 auch als Bestandteil einer Anlage 19 zum Herstellen von Gebinden 20, die jeweils aus mehreren über Kleberaufträge 21 miteinander verbundenen Behältern 2 bestehen, wie dies auch in der Figur 10 dargestellt ist, verwendet werden. Dabei weist die Anlage 19 wenigstens eine Vorrichtung 1, bei der dargestellten Ausführungsform aber zwei Vorrichtungen 1 auf, in denen die Behälter 2 durch Ausrichten und/oder gesteuertes Drehen während des Passierens des Ausrichtabschnitts 5.1 an den erforderlichen Umfangsbereichen mit Kleberaufträgen 21 versehen werden, d.h. bei den dargestellten Gebinden 20 an Umfangsbereichen, die um die jeweilige Behälterachse um 90° gegeneinander versetzt sind. Das Aufbringen der Kleberaufträgen 21 erfolgt dabei am oder aber auch unmittelbar nach dem Ausrichtabschnitt 5.1.
Die Erfindung wurde voranstehend an Ausführungsbeispielen beschrieben. Es versteht sich, dass zahlreiche Änderungen und Abweichungen möglich sind. So wurde vorstehend davon ausgegangen, dass die Behälteraufnahmen 4.1 - 4.4 Drehteller sind. Selbstverständlich ist auch eine andere Ausbildung der Behälteraufnahmen möglich, beispielsweise in Form von Behälterträgern für eine hängende Halterung der Behälter 2 (z.B. Neckhalter) oder in Form von Behältertransporttaschen, deren Behälteranlageflächen für ein gesteuertes Drehen der Behälter drehend oder umlaufend ausgeführt, beispielsweise von wenigstens einem umlaufend antreibbaren Ausrichtriemen oder -band gebildet sind, beispielsweise von den Riemen 8.1 - 8.4 oder ähnlichen Riemen.
Weiterhin wurde vorstehend davon ausgegangen, dass die drehgesteuerten Behälteraufnahmen 4.1 - 4.4 an dem umlaufenden Rotor 3 vorgesehen sind. Alternativ hierzu können die Behälter 2 aber auch auf einem Transportband aufstehend durch die Ausricht- und Transportstrecke bzw. durch deren Ausrichtabschnitt bewegt werden, wobei dann die drehangetriebenen Behälteraufnahmen aus neben und/oder über dem Transportband angeordneten Ausrichtbändern bestehen.

### Bezugszeichenliste

- 1: Vorrichtung
- 2: Behälter
- 3: Rotor
- 4: Folge
- 4.1 - 4.4: Behälteraufnahmen
- 5: Transport- und Orientierungsstrecke
- 5.1: Ausricht- und Transportstrecke
- 6: Sensor
- 7, 7a: Antriebseinheit
- 8.1 - 8.4: Riemen- oder Zahnriemenrad
- 9.1 - 9.4: Riemenrad oder Zahnriemenrad
- 9.1a - 9.4a: Antriebsrad
- 10.1 - 10.4: Riemen- oder Zahnriemenrad
- 11, 12: Welle
- 13: Maschinengestell
- 14.1 - 14.4: Zahnkranz
- 15.1 - 15.4: Zahnrad
- 16: Etikettiermaschine
- 16.1: Etikettieraggregat
- 17, 18: Aggregat
- 19: Anlage zum Herstellen von Gebinden
- 20: Gebinde
- 21: Kleberauftrag
- BA: Drehachse der Behälteraufnahmen
- MA: Maschinenachse

## Patentansprüche

1. Vorrichtung zum gesteuerten Ausrichten und/oder gesteuerten Drehen von Behältern (2), mit einem Transportelement (3) zum Bewegen der Behälter (2) auf einer Ausricht- und Transportstrecke (5) zwischen einem Behältereinlauf (1.1) und einem Behälterauslauf (1.2) in einer Transportrichtung (A), mit mehreren in Transportrichtung (A) aufeinander folgenden Behälteraufnahmen (4.1 - 4.4), die für ein Ausrichten der Behälter (2) durch Drehen oder Schwenken um ihre Behälterachse durch Antriebe drehgesteuert sind,
**dadurch gekennzeichnet,**
**dass** die Behälteraufnahmen (4.1 - 4.4) wenigstens zwei Gruppen von Behälteraufnahmen bilden, dass jede Gruppe von Behälteraufnahmen wenigstens zwei Behälteraufnahmen (4.1 - 4.4) umfasst und die Behälteraufnahmen (4.1 - 4.4) wenigstens zwei in Transportrichtung (A) aufeinanderfolgende, vorzugsweise identische Folgen (4) bilden, in denen von jeder Gruppe eine Behälteraufnahme (4.1 - 4.4) vorgesehen ist, und dass für jede Gruppe von Behälteraufnahmen (4.1 - 4.4) ein eigenständiger Stell- oder Drehantrieb (7, 7a) vorgesehen ist, mit dem Behälteraufnahmen (4.1 - 4.4) der betreffenden Gruppe gemeinsam drehgesteuert sind.

2. Vorrichtung nach Anspruch 1, **dadurch gekennzeichnet, dass** die Ausricht- und Transportstrecke (5) oder ein Teilabschnitt der Ausricht- und Transportstrecke (5) einen Ausrichtabschnitt (5.1) bildet, dass die Länge, die der Ausrichtabschnitt (5.1) in Transportrichtung (A) aufweist, gleich oder etwa gleich derjenigen Länge ist, die die Folgen (4) von Behälteraufnahmen (4.1 - 4.4) jeweils in Transportrichtung (A) aufweisen, und/oder gleich oder etwa gleich der Summe der Teilungsabstände der Behälteraufnahmen (4.1 - 4.4) einer Folge (4) von Behälteraufnahmen (4.1 - 4.4) ist.

3. Vorrichtung nach Anspruch 1, **dadurch gekennzeichnet, dass** die Ausricht- und Transportstrecke (5) oder ein Teilabschnitt der Ausricht- und Transportstrecke (5) einen Ausrichtabschnitt (5.1) bildet, dass die Länge, die der Ausrichtabschnitt (5.1) in Transportrichtung (A) aufweist, höchstens gleich derjenigen Länge ist, die die Folgen (4) von Behälteraufnahmen (4.1 - 4.4) jeweils in Transportrichtung (A) aufweisen, und/oder höchstens gleich der Summe der Teilungsabstände der Behälteraufnahmen (4.1 - 4.4) einer Folge (4) von Behälteraufnahmen (4.1 - 4.4) ist.

4. Vorrichtung nach Anspruch 3, **dadurch gekennzeichnet, dass** die Länge, die der Ausrichtabschnitt (5.1) in Transportrichtung (A) aufweist, kleiner als diejenige Länge ist, die die Folgen (4) von Behälteraufnahmen (4.1 - 4.4) jeweils in Transportrichtung (A) aufweisen, und/oder kleiner als die Summe der Teilungsabstände der Behälteraufnahmen (4.1 - 4.4) einer Folge (4) von Behälteraufnahmen (4.1 - 4.4) ist.

5. Vorrichtung nach einem der vorhergehenden Ansprüche, **dadurch gekennzeichnet, dass** für jede Gruppe von Behälteraufnahmen (4.1 - 4.4) ein eigenständiger Stell- oder Servomotor des Stell- oder Drehantriebs vorgesehen ist, der über einen nur ihm zugeordneten Band-, Ketten- oder Riemenantrieb (8.1 - 8.4) und/oder über ein nur ihm zugeordnetes Zahnradantriebe mit ihren Behälteraufnahmen (4.1 - 4.4) der betreffenden Gruppe antriebmäßig verbunden ist.

6. Vorrichtung nach einem der vorhergehenden Ansprüche, **dadurch gekennzeichnet, dass** die Behälteraufnahmen (4.1 - 4.4) Standflächen für die Behälter (2) bildende Drehteller oder Behälterträger für eine hängende Halterung der Behälter (2) sind.

7. Vorrichtung nach einem der vorhergehenden Ansprüche, **gekennzeichnet durch** wenigstens einen die Drehstellung der Behälteraufnahmen (4.1 - 4.4) und/oder der Behälter (2) erfassenden Sensor (6) zur Steuerung der Drehbewegung der Behälteraufnahmen (4.1 - 4.4).

8. Vorrichtung nach einem der vorhergehenden Ansprüche, **dadurch gekennzeichnet, dass** das Transportelement ein um eine vertikale Maschinenachse (MA) umlaufend antriebbarer Rotor (3) ist, an dessen Umfang in gleichmäßigen Winkel- oder Teilungsabständen um die Maschinenachse (MA) versetzt die Behälteraufnahmen (4.1 - 4.4) vorgesehen sind.

9. Vorrichtung nach einem der Ansprüche 5 - 8, **dadurch gekennzeichnet, dass** der Stell- oder Drehantrieb (7, 7a) für jede Gruppe von Behälteraufnahmen (4.1 - 4.4) ein eigenständiges, vorzugsweise achsgleich mit der Maschinenachse (MA) angeordnetes Antriebsrad (8.1 - 8.4) für ein band-, Band-, riemen- oder kettenartiges Element des Riemen- oder Kettenantriebs und/oder für jede Gruppe von Behälteraufnahmen (4.1 - 4.4) einen eigenständigen, vorzugsweise achsgleich mit der Maschinenachse (MA) angeordneten Zahnkranz (14.1 - 14.4) des Zahnradantriebs aufweist.

10. Vorrichtung nach einem der vorhergehenden Ansprüche, **dadurch gekennzeichnet, dass** sie Bestandteil einer Etikettiermaschine (16) mit wenigstens einem Etikettieraggregat (16.1) oder Bestandteil eines Aggregates (17, 18) zum Orientieren von Behältern (2) und zur Weiterleitung der Behälter (2) in einer vorgegebenen Orientierung an eine nachfolgende Vorrichtung oder Bestandteil einer Anlage (19) ist, mit der Kleberaufträge (21) auf eine vorgegebene Orientierung aufweisende Bereiche der Behälter (2) aufgebracht werden, um so jeweils mehrere Behälter (2) über die Kleberaufträge (21) zu einem Gebinde zu verbinden.

11. Verfahren zum Ausrichten und/oder Drehen von Behältern (2), **dadurch gekennzeichnet, dass** eine Vorrichtung (1) nach einem der vorhergehenden Ansprüche 2-10 verwendet wird und dass das wenigstens einmalige Ausrichten und/oder Drehen jedes Behälters (2) durch gesteuertes Drehen der Behälteraufnahmen (4.1 - 4.4) beim Passieren des Ausrichtabschnitts (5.1) erfolgt.

## Claims

1. Device for the controlled orientation and/or controlled rotation of containers (2), comprising a conveying element (3) for moving the containers (2) on an orientation and conveying section (5) between a container intake point (1.1) and a container discharge point (1.2) in a direction of conveyance (A), comprising a plurality of container holders (4.1 - 4.4) following one after the other in the direction of conveyance (A), the rotation of which is controlled by drives so as to orientate the containers (2) by rotating or pivoting about their container axis,
**characterised in that**
the container holders (4.1 - 4.4) form at least two groups of container holders, that each group of container holders comprises at least two container holders (4.1 - 4.4), and the container holders (4.1 - 4.4) form at least two files (4) following one another in the direction of conveyance (A) and preferably identical, in which of each group a container holder (4.1 - 4.4) is provided, and that for each group of container holders (4.1 - 4.4) an independent rotating or pivoting drive (7, 7a) is provided, by which container holders (4.1 - 4.4) of the group concerned are rotated in common in a controlled manner.

2. Device according to claim 1, **characterised in that** the orientation and conveying section (5), or a part segment of the orientation and conveying section (5), forms an orientation segment (5.1), that the length which the orientation segment (5.1) exhibits in the direction of conveyance (A) is the same or approximately the same as the length which the files (4) of container holders (4.1 - 4.4) exhibit in each case in the direction of conveyance (A), and/or equal or approximately equal to the sum of the division distance intervals of the container holders (4.1 - 4.4) of a file of container holders (4.1- 4.4).

3. Device according to claim 1, **characterised in that** the orientation and conveying section (5), or a part segment of the orientation and conveying section (5), forms an orientation segment (5.1), that the length which the orientation segment (5.1) exhibits in the direction of conveyance (A) is at the most equal to that length which the files (4) of container holders (4.1 - 4.4) exhibit in each case in the direction of conveyance (A) and/or at the most equal to the sum of the division distance intervals of the container holders (4.1 - 4.4) of a file (4) of container holders (4.1- 4.4).

4. Device according to claim 3, **characterised in that** the length which the orientation section (5.1) exhibits in the direction of conveyance (A) is smaller than that length which the files (4) of container holders (4.1 - 4.4) exhibit in each case in the direction of conveyance (A), and/or smaller sum of the division distance intervals of the container holders (4.1 - 4.4) of a file (4) of container holders (4.1- 4.4).

5. Device according to any one of the preceding claims, **characterised in that** for each group of container holders (4.1 - 4.4) an independent actuator or servomotor of the positioning or rotation drives is provided, which is drive-connected by means of a band, chain, or belt drive (8.1 - 8.4), allocated exclusively to it, and/or by means of a toothed wheel drive, allocated exclusively to it, to its container holder (4.1 - 4.4) of the group concerned.

6. Device according to any one of the preceding claims, **characterised in that** the container holders (4.1 - 4.4) are standing surfaces for the rotating plates forming the containers (2), or container carriers for a suspended holding of the containers (2).

7. Device according to any one of the preceding claims, **characterised by** at least one sensor (6) which detects the rotational position of the container holder (4.1 - 4.4) and/or the containers (2), in order to control the rotational position of the container holders (4.1 - 4.4).

8. Device according to any one of the preceding claims, **characterised in that** the conveying element is a rotor (3) which can be driven such as to circulate about a vertical machine axis (MA), provided at the circumference of which are the container holders (4.1 - 4.4), located offset at uniform angular distances or division distance intervals about the machine axis (MA).

9. Device according to any one of the claims 5- 8, **characterised in that** the positioning or rotation drive (7, 7a) for each group of container holders (4.1 - 4.4) comprises an independent drive wheel (8.1 - 8.4), preferably arranged coaxially with the machine axis (MA), for a band, belt, or chain-type element of the belt or chain drive, and/or, for each group of container holders (4.1 - 4.4), an independent toothed rim wheel (14.1 - 14.4) of the toothed wheel drive, preferably arranged coaxially with the machine axis (MA).

10. Device according to any one of the preceding claims, **characterised in that** it is a constituent part of a labelling machine (16) with at least one labelling device (16.1), or a constituent part of a device (17, 18) for the orienting of containers (2) and for further conveying of the containers (2) in a predetermined orientation to a following downstream device, or is a constituent part of a system (19) with which adhesive applications (21) are applied onto areas of the containers (2) exhibiting a predetermined orientation, in order in this way to connect in each case a plurality of containers (2), by means of the adhesive applications (21), to form a pack.

11. Method for the orientation and/or rotation of containers (2), **characterised in that** a device (1) according to any one of the preceding claims 2-10 is used, and that the at least one orientation and/or rotation of each container (2) is carried out by controlled rotation of the container holders (4.1 - 4.4) when passing along the orientation segment (5.1).

## Revendications

1. Dispositif pour orientation et/ou rotation commandée de récipients (2), avec un élément de transport (3) pour le déplacement des récipients (2) sur une voie d'orientation et de transport (5) entre une entrée de récipient (1.1) et une sortie de récipient (1.2) dans un sens de transport (A), avec plusieurs logements de récipients (4.1-4.4) se suivant dans le sens de transport (A) qui sont commandés en rotation pour une orientation des récipients (2) par rotation ou pivotement autour de leur axe de récipient par des entraînements,
**caractérisé en ce**
**que** les logements de récipients (4.1-4.4) forment au moins deux groupes de logements de récipients, **en ce que** chaque groupe de logements de récipients comporte au moins deux logements de récipients (4.1-4.4) et les logements de récipients (4.1-4.4) forment au moins deux suites (4) de préférence identiques, se suivant dans le sens de transport (A), dans lesquelles de chaque groupe est prévu un logement de récipients (4.1-4.4), et **en ce que** pour chaque groupe de logements de récipients (4.1-4.4) un entraînement de réglage ou de rotation autonome (7, 7a) est prévu, avec lequel des logements de récipients (4.1-4.4) du groupe concerné sont commandés en rotation en commun.

2. Dispositif selon la revendication 1, **caractérisé en ce que** la voie d'orientation et de transport (5) ou une section partielle de la voie d'orientation et de transport (5) forme une section d'orientation (5.1), **en ce que** la longueur que présente la section d'orientation (5.1) dans le sens de transport (A), est identique ou à peu près identique à la longueur que présentent les suites (4) de logements de récipients (4.1-4.4) respectivement dans le sens de transport (A), et/ou est identique ou à peu près identique à la somme des distances de pas des logements de récipients (4.1-4.4) d'une suite (4) de logements de récipients (4.1-4.4).

3. Dispositif selon la revendication 1, **caractérisé en ce que** la voie d'orientation et de transport (5) ou une section partielle de la voie d'orientation et de transport (5) forme une section d'orientation (5.1) **en ce que** la longueur que présente la section d'orientation (5.1) dans le sens de transport (A), est au plus identique à la longueur que les suites (4) de logements de récipients (4.1-4.4) présentent respectivement dans le sens de transport (A) et/ou est au plus identique à la somme des distances de pas des logements de récipients (4.1-4.4) d'une suite (4) de logements de récipients (4.1-4.4).

4. Dispositif selon la revendication 3, **caractérisé en ce que** la longueur que présente la section d'orientation (5.1) dans le sens de transport (A), est plus petite que la longueur que présentent les suites (4) de logements de récipients (4.1-4.4) respectivement dans le sens de transport (A), et/ou est plus petite que la somme des distances de pas des logements de récipients (4.1-4.4) d'une suite (4) de logements de récipients (4.1-4.4).

5. Dispositif selon l'une quelconque des revendications précédentes, **caractérisé en ce que** pour chaque groupe de logements de récipients (4.1-4.4) un moteur de réglage ou servomoteur autonome de l'entraînement de réglage ou de rotation est prévu, lequel est raccordé en entraînement par le biais d'un entraînement à bande, chaîne ou courroie (8.1-8.4) associé seulement à celui-ci et/ou par le biais d'un entraînement à roue dentée associé seulement à celui-ci à leurs logements de récipients (4.1-4.4) du groupe concerné.

6. Dispositif selon l'une quelconque des revendications précédentes, **caractérisé en ce que** les logements de récipients (4.1-4.4) sont des surfaces de pose pour les plateaux tournants formant des récipients (2) ou supports de récipients pour un support suspendu des récipients (2).

7. Dispositif selon l'une quelconque des revendications précédentes, **caractérisé par** au moins un capteur (6) détectant la position rotative des logements de récipients (4.1-4.4) et/ou des récipients (2) pour la commande du mouvement rotatif des logements de récipients (4.1-4.4).

8. Dispositif selon l'une quelconque des revendications précédentes, **caractérisé en ce que** l'élément de transport est un rotor (3) pouvant être entraîné en rotation autour d'un axe de machine (MA) vertical, sur la périphérie duquel les logements de récipients (4.1-4.4) sont prévus en déport à des distances angulaires ou de pas uniformes autour de l'axe de machine (MA).

9. Dispositif selon l'une quelconque des revendications 5 à 8, **caractérisé en ce que** l'entraînement de réglage ou de rotation (7, 7a) pour chaque groupe de logements de récipients (4.1-4.4) présente une roue d'entraînement (8.1-8.4) autonome, agencée de préférence sur le même axe que l'axe de machine (MA) pour un élément de bande, bande, courroie ou chaîne de l'entraînement de courroie ou chaîne et/ou pour chaque groupe de logements de récipients (4.1-4.4) une courroie dentée (14.1-14.4) autonome, agencée de préférence sur le même axe que l'axe de machine (MA) de l'entraînement à roue dentée.

10. Dispositif selon l'une quelconque des revendications précédentes, **caractérisé en ce qu'**il fait partie d'une étiqueteuse (16) avec au moins un groupe d'étiquetage (16.1) ou partie d'un groupe (17, 18) pour l'orientation de récipients (2) et pour la transmission des récipients (2) dans une orientation prescrite à un dispositif suivant ou partie d'une installation (19), avec laquelle des applications de colle (21) sont appliquées sur des zones présentant une orientation prescrite des récipients (2) afin de raccorder ainsi respectivement plusieurs récipients (2) par le biais des applications de colle (21) pour former un emballage.

11. Procédé pour orientation et/ou rotation de récipients (2), **caractérisé en ce qu'**un dispositif (1) selon l'une quelconque des revendications précédentes 2 à 10 est utilisé et **en ce que** l'au moins une orientation et/ou rotation unique de chaque récipient (2) est effectuée par rotation commandée des logements de récipients (4.1-4.4) lors du passage de la section d'orientation (5.1).
